Europäisches Patentamt

European Patent Office

Office européen des brevets

(19)

(11) EP 0 791 827 A1

## (12) EUROPEAN PATENT APPLICATION

(43) Date of publication:
27.08.1997 Bulletin 1997/35

(51) Int Cl.6: G01N 27/407, G01N 27/419

(21) Application number: 97301199.2

(22) Date of filing: 24.02.1997

(84) Designated Contracting States:
DE FR GB IT SE

(30) Priority: 23.02.1996 JP 36666/96
06.02.1997 JP 24105/97

(71) Applicant: NGK INSULATORS, LTD.
Nagoya-City, Aichi Prefecture 467 (JP)

(72) Inventors:
• Kato, Nobuhide
Ama-gun, Aichi-pref.497 (JP)

• Nakagaki, Kunihiko
Nagoya-city, Aichi-pref.461 (JP)

(74) Representative: Paget, Hugh Charles Edward et al
MEWBURN ELLIS
York House
23 Kingsway
London WC2B 6HP (GB)

### (54) Nitrogen oxide sensor

(57) Disclosed is an oxide sensor for measuring nitrogen oxides contained in a measurement gas. A pumping voltage (Vp1) applied to a main pumping cell (68) is adjusted so that a partial pressure of oxygen in a first chamber (60) is in a range of $1 \times 10^{-8}$ to $1.7 \times 10^{-4}$ atm. An inner pumping electrode (64) is composed of an inactive material having a low catalytic activity on the nitrogen oxides. After the partial pressure of oxygen in the measurement gas is allowed to have a predetermined amount in the first chamber (60), the measurement gas is introduced into a second chamber (62) through a second diffusion rate-determining section (58). NOx in the measurement gas introduced into the second chamber (62) is decomposed by a detecting electrode (80) or a catalyst to produce $O_2$ which is pumped out toward a reference gas-introducing space (54) by the aid of the detecting electrode (80). A value of a current (Ip2) is generated during this process, on the basis of which the NOx concentration in the measurement gas is measured. Accordingly, it is possible to measure the nitrogen oxides contained in the measurement gas with an extremely high degree of accuracy. Moreover, the sensor is compact, inexpensive, and convenient in handling, making it possible that maintenance such as offset adjustment is unnecessary.

F I G. 2

**Description**

BACKGROUND OF THE INVENTION

Field of the Invention:

The present invention relates to a nitrogen oxide sensor for measuring nitrogen oxides contained in, for example, atmospheric air and exhaust gas discharged from vehicles or automobiles.

Description of the Related Art:

Exhaust gas, which is discharged, for example, from vehicles or automobiles such as gasoline-fueled automobiles and diesel powered automobiles, contains nitrogen oxides (NOx) such as nitrogen monoxide (NO) and nitrogen dioxide ($NO_2$), as well as carbon monoxide (CO), hydrocarbon (HC), hydrogen ($H_2$), oxygen ($O_2$) and so on. In such exhaust gas, about 80 % of the entire NOx is occupied by NO, and about 95 % of the entire NOx is occupied by NO and $NO_2$.

The three way catalyst, which is used to clean HC, CO, and NOx contained in the exhaust gas, exhibits its maximum cleaning efficiency in the vicinity of the theoretical air fuel ratio (A/F = 14.6). If A/F is controlled to be not less than 16, the amount of produced NOx is decreased. However, the cleaning efficiency of the catalyst is lowered, and consequently the amount of discharged NOx is apt to increase.

Recently, in order to effectively utilize fossil fuel and avoid global warming, the market demand increases, for example, in that the discharge amount of $CO_2$ should be suppressed. In order to respond to such a demand, it becomes more necessary to improve the fuel efficiency. In response to such a demand, for example, the lean burn engine and the catalyst for cleaning NOx are being researched. Especially, the need for a NOx sensor increases. A conventional NOx analyzer has been hitherto known as an instrument for detecting NOx. The conventional NOx analyzer is operated to measure a characteristic inherent in NOx, based on the use of chemical luminous analysis. However, the conventional NOx analyzer is inconvenient in that the instrument itself is extremely large and expensive. The conventional NOx analyzer requires frequent maintenance because optical parts are used to detect NOx. Further, when the conventional NOx analyzer is used, any sampling operation should be performed for measurement of NOx, where it is impossible to directly insert a detecting element itself into a fluid. Therefore, the conventional NOx analyzer is not suitable for analyzing transient phenomena such as those occur in the exhaust gas discharged from an automobile, in which the condition frequently varies.

In order to dissolve the inconveniences as described above, there has been already suggested a sensor for measuring a desired gas component in exhaust gas by using a substrate comprising an oxygen ion-conductive solid electrolyte.

FIG. 10 shows a system of a gas analyzer disclosed in International Publication WO 95/30146. This apparatus comprises a first chamber 4 into which a measurement gas containing NO is introduced through a narrow hole 2, and a second chamber 8 into which the measurement gas is introduced from the first chamber 4 through a narrow hole 6. Wall surfaces for constructing the first and second chambers 4, 8 are composed of partition walls 10a, 10b made of zirconia ($ZrO_2$) capable of transmitting oxygen ion. A pair of measuring electrodes 12a, 12b and a pair of measuring electrodes 14a, 14b for measuring the partial pressure of oxygen in the respective chambers are arranged on portions of one $ZrO_2$ partition wall 10a corresponding to the first and second chambers 4, 8 respectively. A set of pumping electrodes 16a, 16b and a set of pumping electrodes 18a, 18b for pumping out $O_2$ in the respective chambers to the outside of the chambers are arranged on the other $ZrO_2$ partition wall 10b.

The gas analyzer thus constructed functions as follows. Namely, the partial pressure of oxygen contained in the measurement gas introduced into the first chamber 4 through the narrow hole 2 is detected by a voltmeter 20 as an electric potential difference generated between the measuring electrodes 12a, 12b. A voltage of 100 to 200 mV is applied between the pumping electrodes 16a, 16b by the aid of a power source 22 so that the electric potential difference is adjusted to have a predetermined value. Accordingly, $O_2$ in the first chamber 4 is pumped out to the outside of the apparatus. The amount of pumped out oxygen can be measured by using an ammeter 24.

The measurement gas, an oxygen concentration of which has been adjusted, is introduced into the second chamber 8 through the narrow hole 6. In the second chamber 8, an electric potential difference generated between the measuring electrodes 14a, 14b is detected by a voltmeter 26. Thus the partial pressure of oxygen in the second chamber 8 is measured. On the other hand, NO contained in the measurement gas introduced into the second chamber 8 is decomposed as follows by the aid of a voltage applied between the pumping electrodes 18a, 18b by means of a power source 28:

$$NO \rightarrow (1/2)N_2 + (1/2)O_2$$

$O_2$ produced by the decomposition is pumped out to the outside of the second chamber 8 by the aid of the pumping electrodes 18a, 18b. A value of an electric current generated during this process is detected by an ammeter 30. Thus the concentration of NO contained in the measurement gas is measured.

However, the gas analyzer constructed as described above is deficient in consideration for the catalyst activity possessed by a material for the pumping electrode. Therefore, the applicable voltage between the pumping electrodes 16a, 16b for the first chamber 4 is 200 mV to the utmost. Further, the applicable voltage between the pumping electrodes 18a, 18b for the second chamber 8 is 300 mV to the utmost.

An electromotive force of 200 mV, which is obtained at a temperature of the element of 700 °C, corresponds to an $O_2$ concentration of about 15 ppm. Taking an amount of voltage drop caused by the pumping current into consideration, the oxygen concentration in the first chamber 4 is estimated to be not less than 100 ppm. On the other hand, an electromotive force of 300 mV, which is obtained at a temperature of the element of 700 °C, corresponds to an $O_2$ concentration of about 0.1 ppm. The oxygen concentration in the second chamber 8 is estimated to be 0.3 ppm even after taking an amount of voltage drop caused by the pumping current into consideration. Therefore, the oxygen concentration in the second chamber 8 provides a value which is almost negligible as compared with the oxygen concentration in the first chamber 4.

The difference in oxygen concentration between the first and second chambers 4, 8 appears as an offset current for the current of NO decomposition. Therefore, a concentration of $O_2 = 100$ ppm corresponds to 200 ppm after conversion into a concentration of NO, which is 2-fold, representing an excessively large value as the offset. Thus the following procedure may be conceived so that the offset current approaches zero. Namely, the catalyst activity of the pumping electrode 16b in the first chamber 4 is lowered to establish a condition under which decomposition of NO does not occur even at a lower partial pressure of oxygen, and thus the oxygen concentration in the first chamber 4 is made substantially equivalent to that in the second chamber 8.

However, if the catalyst activity of the pumping electrode 16b in the first chamber 4 is lowered, and the oxygen concentration in the first chamber 4 is controlled to be not less than 400 mV as represented by an electromotive force of an oxygen concentration cell with respect to a reference partial pressure of oxygen, then almost all $O_2$ contained in the measurement gas is removed in the first chamber 4. Therefore, for example, when inflammable or combustible gases such as HC, CO, and $H_2$ are contained in the measurement gas, an inconvenience arises in that the detection sensitivity to NO varies depending on the inflammable gases, because of the following reason.

Namely, if the partial pressure of oxygen contained in the second chamber 8 is decreased to be lower than a predetermined value, the co-existing state, which is established between $O_2$ and the inflammable gases, collapses. Thus, for example, the following burning or combustion reactions occur.

$$H_2 + NO \rightarrow H_2O + (1/2)N_2$$

$$CO + NO \rightarrow CO_2 + (1/2)N_2$$

$$CnHm + (2n+m/2)NO \rightarrow nCO_2 + (m/2)H_2O + (n+m/4)N_2$$

As a result, a part of NO which is the measurement objective burns or combusts in the first chamber 4.

SUMMARY OF THE INVENTION

The present invention aims to overcome or to ameliorate the inconvenience described above and aims to provide a nitrogen oxide sensor which makes it possible to measure nitrogen oxides contained in a measurement gas with an extremely high degree of accuracy, the nitrogen oxide sensor being compact, inexpensive, and convenient in handling, and making it possible that maintenance such as offset adjustment is unnecessary.

According to the present invention a nitrogen oxide sensor is provided comprising a main pumping means including a solid electrolyte for contacting with external space, and inner and outer electrodes formed on inner and outer surfaces of the solid electrolyte, for performing a pumping process for oxygen contained in a measurement gas introduced from the external space, on the basis of a control voltage applied between the electrodes; a main pumping control means for adjusting a level of the control voltage so that a partial pressure of oxygen brought about by the pumping process performed by the main pumping means is not less than $1 \times 10^{-8}$ atm; and an electric signal-generating conversion means including a solid electrolyte and inner and outer detecting electrodes provided in contact with the solid electrolyte, for providing, by conversion, an electric signal corresponding to an amount of oxygen contained in the measurement gas after being subjected to the pumping process performed by the main pumping means; wherein nitrogen oxides in the measurement gas are measured on the basis of the electric signal supplied from the electric signal-generating conversion means.

According to the present invention, at first, the oxygen in the measurement gas introduced from the external space is subjected to the pumping process performed by the main pumping means, and the oxygen is adjusted to have a predetermined concentration. The measurement gas, in which the oxygen concentration has been adjusted by the main pumping means, is introduced into the electric signal-generating conversion means in the next step. The electric signal-generating conversion means performs conversion into the electric signal corresponding to an amount of oxygen contained in the measurement gas after being subjected to the pumping process performed by the main pumping means. After that, the nitrogen oxides contained in the measurement gas are measured on the basis of the electric signal supplied from the electric signal-generating conversion means.

Especially, in the present invention, the partial pressure of oxygen contained in the measurement gas after being subjected to the pumping process performed by the main pumping means is not less than $1 \times 10^{-8}$ atm by adjusting the control voltage applied to the main pumping means to have a predetermined value by the aid of the main pumping control means.

The nitrogen oxide sensor may further comprise a measuring pumping means and a current-detecting means to serve as the electric signal-generating conversion means. In this preferred embodiment, the measurement gas, in which the oxygen concentration has been adjusted by the main pumping means, is introduced into the measuring pumping means.

The oxygen in the measurement gas is subjected to a pumping process by the aid of the measuring pumping means on the basis of a measuring voltage applied between inner and outer detecting electrodes. A pumping current is generated in the measuring pumping means, corresponding to an amount of oxygen subjected to the pumping process performed by the measuring pumping means. The generated pumping current is detected by the current-detecting means. Thus the nitrogen oxides are measured, corresponding to the amount of oxygen.

As for the measuring pumping means, a pumping voltage sufficient to decompose the nitrogen oxides is applied between the inner and outer detecting electrodes, and/or the measuring pumping means is arranged with a nitrogen oxide-decomposing catalyst for decomposing the nitrogen oxides. In such an embodiment, oxygen is produced from the nitrogen oxides decomposed by the action of the pumping voltage and/or the action of the nitrogen oxide-decomposing catalyst. The produced oxygen is subjected to the pumping process, and the pumping current thereby generated is detected by the current-detecting means. Thus the nitrogen oxides are measured, corresponding to the amount of oxygen.

In another preferred embodiment, the nitrogen oxide sensor of the present invention may further comprise a concentration-detecting means and a voltage-detecting means to serve as the electric signal-generating conversion means. In this embodiment, the measurement gas, in which the concentration of oxygen has been adjusted by the main pumping means, is introduced into the concentration-detecting means in the next step. The concentration-detecting means generates an electromotive force of an oxygen concentration cell, corresponding to a difference between an amount of oxygen contained in the measurement gas after being subjected to the pumping process performed by the main pumping means and an amount of oxygen contained in the gas existing on the side of the outer detecting electrode. The generated electromotive force is detected by the voltage-detecting means. Thus the nitrogen oxides are measured, corresponding to the amount of oxygen.

In still another embodiment the concentration-detecting means is arranged with a nitrogen oxide-decomposing catalyst for decomposing the nitrogen oxides. Accordingly, an electromotive force of an oxygen concentration cell is generated between the inner and outer detecting electrodes, corresponding to a difference between an amount of oxygen produced from the nitrogen oxides decomposed by the action of the nitrogen oxide-decomposing catalyst and an amount of oxygen contained in the gas existing on the side of the outer detecting electrode. The generated electromotive force is detected by the voltage-detecting means. Thus the nitrogen oxides are measured, corresponding to the amount of oxygen.

In the nitrogen oxide sensor according to the present invention, the partial pressure of oxygen obtained after being subjected to the pumping process performed by the pumping means is maintained to have a predetermined value. Accordingly, for example, the following reactions are allowed to proceed between the oxygen and inflammable gases contained in the measurement gas.

$$H_2 + (1/2)O_2 \rightarrow H_2O$$

$$CO + (1/2)O_2 \rightarrow CO_2$$

$$CnHm + (n+m/2)O_2 \rightarrow nCO_2 + (m/2)H_2O$$

As a result, the decomposition reaction of the nitrogen oxides, which would be otherwise caused by the inflammable gases, is appropriately suppressed. Therefore, the nitrogen oxides are not decomposed during the pumping process performed by the main pumping means. The nitrogen oxides are supplied to the measuring pumping means or the concentration-detecting means in the next step. Thus the nitrogen oxides can be measured with a high degree of accuracy.

The nitrogen oxide sensor constructed as described above may further comprise a concentration-measuring means including the solid electrolyte, an inner measuring electrode formed on the solid electrolyte to be opposed to the inner pumping electrode of the main pumping means or on an identical plane therewith, and an outer measuring electrode formed on the solid electrolyte on a side opposite to the inner measuring electrode, for measuring an electromotive force of an oxygen concentration cell, generated corresponding to a difference between the partial pressure of oxygen brought about by the pumping process performed by the main pumping means and a reference partial pressure of oxygen, wherein the main pumping control means adjusts the control voltage for the main pumping means on the basis of the electromotive force detected by the concentration-measuring means.

Accordingly, the electromotive force is generated in the concentration-measuring means, corresponding to the difference between the amount of oxygen contained in the measurement gas upon the pumping process performed by the main pumping means and the amount of oxygen contained in the gas existing on the side of the outer measuring electrode. Thus the level of the control voltage to be applied between the inner and outer pumping electrodes of the main pumping means is adjusted on the basis of the electromotive force by the aid of the main pumping control means.

The main pumping means performs the pumping process for an amount of the oxygen in the measurement gas introduced from the external space, the amount corresponding to the level of the control voltage. The oxygen concentration in the measurement gas is subjected to feedback control so that the oxygen concentration is at a predetermined level by supplying, to the main pumping means, the control voltage having been subjected to the adjustment for the level as described above.

The nitrogen oxide sensor constructed as described above may further comprise an auxiliary pumping means including an auxiliary pumping electrode formed in the vicinity of the inner detecting electrode, wherein the oxygen contained in the measurement gas after being subjected to the pumping process performed by the main pumping means is subjected to a pumping process on the basis of a voltage applied between the auxiliary pumping electrode and the outer detecting electrode.

Accordingly, the measurement gas, which has been firstly subjected to the coarse adjustment so that the predetermined gas component has a predetermined concentration by the aid of the main pumping means, is further subjected to the fine adjustment for the concentration of the predetermined gas component by the aid of the auxiliary pumping means.

In general, when the concentration of the predetermined gas component in the measurement gas in the external space greatly changes (for example, from 0 to 20 %), the concentration distribution of the predetermined gas component in the measurement gas introduced into the main pumping means greatly changes. The amount of the predetermined gas component introduced into the measuring pumping means or the concentration-detecting means also changes.

In such a situation, the oxygen concentration in the measurement gas after being subjected to the pumping process performed by the main pumping means is finely adjusted upon the pumping process performed by the auxiliary pumping means. Significantly, the change in oxygen concentration in the measurement gas introduced into the auxiliary pumping means is greatly reduced as a result of the pumping process performed by the main pumping means, as compared with the change in oxygen concentration in the measurement gas supplied from the external space (the measurement gas introduced into the main pumping means). Accordingly, the concentration of the predetermined gas component can be accurately and constantly controlled in the vicinity of the inner detecting electrode of the measuring pumping means or in the vicinity of the outer detecting electrode of the concentration-detecting means.

Therefore, the concentration of the predetermined gas component introduced into the measuring pumping means or the concentration-detecting means is scarcely affected by the change in oxygen concentration in the measurement gas (the measurement gas introduced into the main pumping means). As a result, the pumping current value detected by the current-detecting means or the electromotive force detected by the voltage-detecting means is not affected by the change in concentration of the predetermined gas component in the measurement gas. Thus a value is obtained, which accurately corresponds to the amount of the objective component existing in the measurement gas.

It is preferable for the nitrogen oxide sensor according to the present invention that the inner pumping electrode of the main pumping means is composed of an inactive material having a low catalytic activity on the nitrogen oxides. In this embodiment, the decomposing action on the nitrogen oxides on the inner pumping electrode is suppressed more appropriately.

The inactive material may be composed of a cermet comprising a ceramic and Au or a noble metal added with Au. Alternatively, for example, the inactive material may be composed of a material having a perovskite structure such as $La_3CuO_4$. Any one of the cermet and the material having the perovskite structure can be preferably used.

It is desirable that the partial pressure of oxygen controlled by the main pumping means is $1 \times 10^{-8}$ to $1.7 \times 10^{-4}$ atm. Accordingly, the measurement gas containing oxygen is allowed to be in an optimum co-existing state, which can be supplied to the next processing means, i.e., the measuring pumping means or the concentration-detecting means.

In a preferred embodiment, the partial pressure of oxygen controlled by the main pumping means is $1 \times 10^{-8}$ to $3.5 \times 10^{-5}$ atm, considering the fluctuation of the oxygen concentration caused in the main pumping means due to rapid change in concentration of oxygen contained in the measurement gas.

Thus the present invention especially makes it possible to measure the nitrogen oxides comprising NO or $NO_2$ with a high degree of accuracy.

In the nitrogen oxide sensor constructed as described above, it is preferable that the control voltage applied to the main pumping means is set to be a voltage at which the partial pressure of oxygen controlled by the main pumping means is not less than $1 \times 10^{-8}$ atm, so that the sensor has a detection sensitivity to $NO_2$ of 80 % to 120 % as compared with NO as the nitrogen oxide.

Typically, the diffusion coefficient of $NO_2$ is about 80 % of the diffusion coefficient of NO. Moreover, the following reaction inevitably occurs in the main pumping means.

$$NO_2 \rightarrow NO + (1/2)O_2$$

Accordingly, the control voltage supplied to the main pumping means is set to be not more than a predetermined value which is defined by an electromotive force of the oxygen concentration cell, at which the partial pressure of oxygen after being subjected to the pumping process performed by the main pumping means is not less than $1 \times 10^{-8}$ atm. Thus the sensitivity to $NO_2$ can be set to be 80 % to 120 % of the sensitivity to NO.

In the nitrogen oxide sensor constructed as described above, it is more preferable that the detection sensitivity to $NO_2$ is 90 % to 110 % as compared with the detection sensitivity to NO.

In the nitrogen oxide sensor according to the present invention, the outer measuring electrode is arranged at a position exposed to a space into which the reference gas is introduced. Thus the oxygen contained in the measurement gas can be compared with the oxygen contained in the reference gas, making it possible to detect the nitrogen oxides more accurately. Especially, it is preferable to combine the outer measuring electrode and the outer detecting electrode into a common unit. In this embodiment, a common electrode, which serves as both of the outer measuring electrode of the concentration-measuring means and the outer detecting electrode of the measuring pumping means or the concentration-detecting means, is exposed to the reference gas-introducing space. The common electrode can be defined as a reference electrode for the respective detecting processes performed by the concentration-measuring means, the measuring pumping means, and the concentration-detecting means. In accordance with this definition, the inner measuring electrode of the concentration-measuring means, and the inner detecting electrode of the measuring pumping means and the concentration-detecting means can be defined as a measuring electrode and a detecting electrode respectively.

The main pumping means may include the inner and outer pumping electrodes formed at the inside and the outside of a first chamber surrounded by substrates composed of solid electrolytes, for introducing the measurement gas thereinto, and the substrate interposed between the both electrodes.

The electric signal-generating conversion means may include the detecting electrode formed at the inside of a second chamber surrounded by substrates composed of solid electrolytes, for introducing the measurement gas thereinto after being subjected to the pumping process performed by the main pumping means, a reference electrode formed at the inside of a reference gas-introducing space surrounded by substrates composed of solid electrolytes, for introducing a reference gas thereinto, and the substrate interposed between the detecting electrode and the reference electrode.

The nitrogen oxide sensor constructed as described above may further comprise a first diffusion rate-determining section for giving a predetermined diffusion resistance to the measurement gas, provided at a passage for introducing the measurement gas from the external space into the first chamber, and a second diffusion rate-determining section for giving a predetermined diffusion resistance to the measurement gas, provided at a passage for introducing the measurement gas into the second chamber after being subjected to the pumping process performed by the main pumping means.

The nitrogen oxide sensor constructed as described above may further comprise a third diffusion rate-determining section for giving a predetermined diffusion resistance to the measurement gas, provided at a passage for allowing the measurement gas in the second chamber to approach the detecting electrode.

The nitrogen oxide sensor constructed as described above may further comprise a heating means for heating the respective substrates for constructing the first and second chambers to predetermined temperatures. Accordingly, the operation for detecting the nitrogen oxides is performed after the first and second chambers are heated by the heating means to the predetermined temperatures. Thus the oxygen is detected with a high degree of accuracy by the aid of the measuring pumping means or the concentration-detecting means.

Further, in order to perform the detection highly accurately, it is preferable that the heating means is used to heat the substrates for the first chamber to 400 °C to 900 °C, and heat the substrates for the second chamber to 700 °C to 900 °C.

Preferably, the solid electrolyte is an oxygen ion-conductive solid electrolyte based on the use of a ceramic such as $ZrO_2$. Preferably, a porous material capable of giving a predetermined diffusion resistance to the measurement gas is used for the first or second diffusion rate-determining section in order to provide designed desired states of the measurement gas in the first and second chambers.

The first and second diffusion rate-determining sections may be composed of passages capable of giving predetermined diffusion resistances to the measurement gas respectively.

It is preferable to use an Rh cermet for the nitrogen oxide-decomposing catalyst for constructing the electrode or the catalyst arranged in the first and second chambers.

The above and other optional features and advantages of the present invention will become more apparent from the following description when taken in conjunction with the accompanying drawings in which embodiments of the present invention are shown by way of illustrative example.

DESCRIPTION OF THE DRAWINGS

FIG. 1 shows a plan view illustrating a NOx sensor according to a first embodiment.

FIG. 2 shows a cross-sectional view taken along a line A-A in FIG. 1.

FIG. 3A shows relationships between the CO concentration and the pumping current, obtained by using predetermined oxygen concentrations.

FIG. 3B shows relationships between the $C_3H_8$ concentration and the pumping current, obtained by using predetermined oxygen concentrations.

FIG. 3C shows relationships between the $H_2$ concentration and the pumping current, obtained by using predetermined oxygen concentrations.

FIG. 4 shows relationships concerning the offset for the pumping current, obtained by using predetermined oxygen concentrations.

FIG. 5 shows a cross-sectional view illustrating a NOx sensor according to a second embodiment.

FIG. 6 shows a cross-sectional view illustrating a NOx sensor according to a third embodiment.

FIG. 7 shows a cross-sectional view illustrating a NOx sensor according to a fourth embodiment.

FIG. 8 shows a characteristic concerning the change in electromotive force generated in a measuring oxygen partial pressure-detecting cell depending on the change in NO concentration, obtained by using the NOx sensor according to the fourth embodiment.

FIG. 9 shows characteristics concerning the change in electromotive force generated in the measuring oxygen partial pressure-detecting cell, obtained by changing the inflammable gas concentration in a range of 0 to 2000 ppm by using the NOx sensor according to the fourth embodiment, wherein a solid line represents a characteristic obtained in Example, and a chain line represents a characteristic obtained in Comparative Example.

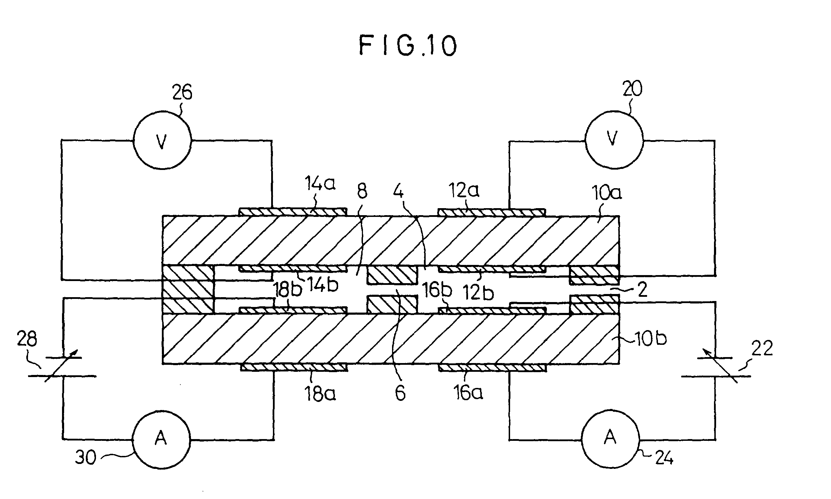

FIG. 10 shows a cross-sectional view illustrating a system of a gas analyzer concerning the conventional technique.

DESCRIPTION OF THE EMBODIMENTS

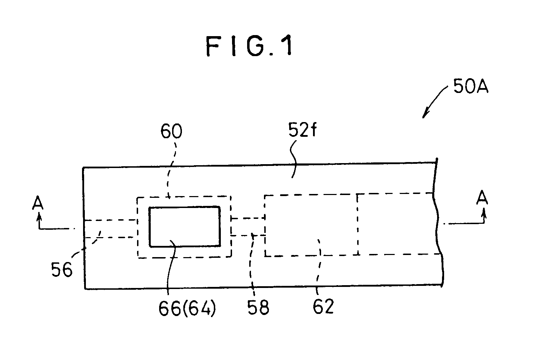

Several embodiments of the nitrogen oxide sensor (NOx sensor) according to the present invention will be explained below with reference to FIGs. 1 to 9.

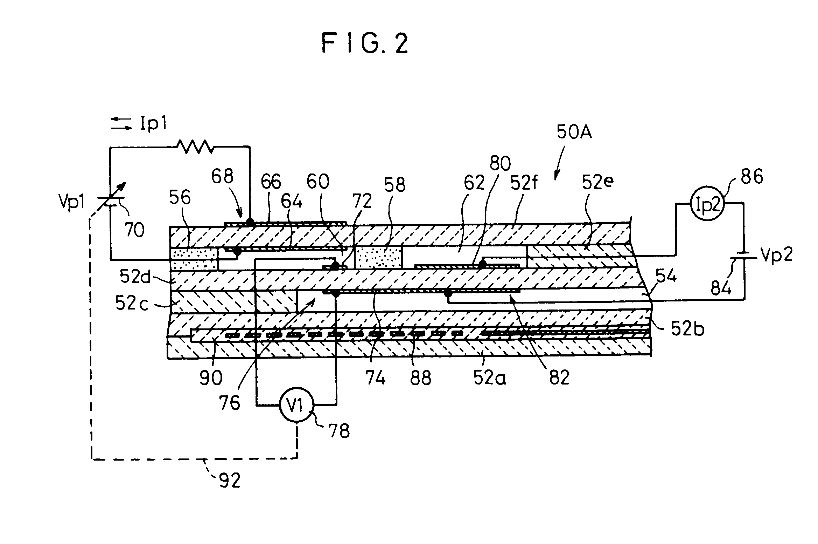

At first, as shown in FIGs. 1 and 2, a NOx sensor 50A according to a first embodiment has a lengthy plate-shaped configuration as a whole, comprising, for example, six stacked solid electrolyte layers 52a to 52f composed of ceramics based on the use of oxygen ion-conductive solid electrolytes such as $ZrO_2$. First and second layers from the bottom are designated as first and second substrate layers 52a, 52b respectively. Third and fifth layers from the bottom are designated as first and second spacer layers 52c, 52e respectively. Fourth and sixth layers from the bottom are designated as first and second solid electrolyte layers 52d, 52f respectively.

Specifically, the first spacer layer 52c is stacked on the second substrate layer 52b. The first solid electrolyte layer 52d, the second spacer layer 52e, and the second solid electrolyte layer 52f are successively stacked on the first spacer layer 52c.

A space (reference gas-introducing space 54), into which a reference gas such as atmospheric air to be used as a reference for measuring oxides is introduced, is formed between the second substrate layer 52b and the first solid electrolyte layer 52d, the space being comparted by a lower surface of the first solid electrolyte layer 52d, an upper surface of the second substrate layer 52b, and a side surface of the first spacer layer 52c.

The second spacer layer 52e is interposed between the first and second solid electrolyte layers 52d, 52f. First and second diffusion rate-determining sections 56, 58 are also interposed between the first and second solid electrolyte layers 52d, 52f.

A first chamber 60 for adjusting the partial pressure of oxygen in a measurement gas is formed and comparted by a lower surface of the second solid electrolyte layer 52f, side surfaces of the first and second diffusion rate-determining sections 56, 58, and an upper surface of the first solid electrolyte layer 52d. A second chamber 62 for finely adjusting the partial pressure of oxygen in the measurement gas and measuring oxides, for example, nitrogen oxides (NOx) in the measurement gas is formed and comparted by a lower surface of the second solid electrolyte layer 52f, a side surface of the second diffusion rate-determining section 58, a side surface of the second spacer layer 52e, and an upper surface of the first solid electrolyte layer 52d.

The external space communicates with the first chamber 60 through the first diffusion-rate determining section 56, and the first chamber 60 communicates with the second chamber 62 through the second diffusion rate-determining section 58.

The first and second diffusion-rate determining sections 56, 58 give predetermined diffusion resistances to the measurement gas to be introduced into the first and second chambers 60, 62 respectively. Each of the first and second diffusion-rate determining sections 56, 58 can be formed as a passage composed of, for example, a porous material, or a small hole having a predetermined cross-sectional area so that the measurement gas may be introduced.

Especially, the second diffusion-rate determining section 58 is arranged and filled with a porous material comprising, for example, $ZrO_2$. The diffusion resistance of the second diffusion-rate determining section 58 is made larger than the diffusion resistance of the first diffusion-rate determining section 56.

An atmosphere in the first chamber 60 is introduced into the second chamber 62 under the predetermined diffusion resistance through the second diffusion rate-determining section 58.

An inner pumping electrode 64, which is composed of a porous cermet electrode having a flat and substantially rectangular shape, is formed on an entire surface portion for forming the first chamber 60, of the lower surface of the second solid electrolyte layer 52f. An outer pumping electrode 66 is formed on a portion corresponding to the inner pumping electrode 64, of the upper surface of the second solid electrolyte layer 52f. An electrochemical pumping cell, i.e., a main pumping cell 68 is constructed by the inner pumping electrode 64, the outer pumping electrode 66, and the second solid electrolyte layer 52f interposed between the both electrodes 64, 66.

A desired control voltage (pumping voltage) Vpl is applied between the inner pumping electrode 64 and the outer pumping electrode 66 of the main pumping cell 68 by the aid of an external variable power source 70 to allow a pumping current Ipl to flow in a positive or negative direction between the outer pumping electrode 66 and the inner pumping electrode 64. Thus the oxygen in the atmosphere in the first chamber 60 can be pumped out to the external space at the outside, or the oxygen in the external space can be pumped into the first chamber 60.

A measuring electrode 72, which is composed of a porous cermet electrode having a flat and substantially rectangular shape, is formed on a portion adjacent to the second diffusion rate-determining section 58, of the upper surface of the first solid electrolyte layer 52d for forming the first chamber 60. A reference electrode 74 is formed on a portion exposed to the reference gas-introducing space 54, of the lower surface of the first solid electrolyte layer 52d. An electrochemical sensor cell, i.e., a controlling oxygen partial pressure-detecting cell 76 is constructed by the measuring electrode 72, the reference electrode 74, and the first solid electrolyte layer 52d.

An electromotive force is generated between the measuring electrode 72 and the reference electrode 74 of the controlling oxygen partial pressure-detecting cell 76 on the basis of a difference in oxygen concentration between the atmosphere in the first chamber 60 and the reference gas (atmospheric air) in the reference gas-introducing space 54. The partial pressure of oxygen in the atmosphere in the first chamber 60 can be detected by measuring the generated electromotive force by the aid of a voltmeter 78.

Namely, the voltage V1, which is generated between the reference electrode 74 and the measuring electrode 72, is an electromotive force of the oxygen concentration cell, generated on the basis of a difference between a partial pressure of oxygen in the reference gas introduced into the reference gas-introducing space 54 and a partial pressure of oxygen in the measurement gas in the first chamber 60. The voltage V1 has the following relationship known as the Nernst's equation.

$$V1 = RT/4F \cdot \ln(P1(O_2)/P0(O_2))$$

R: gas constant;
T: absolute temperature;
F: Faraday constant;
$P1(O_2)$): partial pressure of oxygen in the first chamber 60;

P0($O_2$)): partial pressure of oxygen in the reference gas.

Therefore, the partial pressure of oxygen in the first chamber 60 can be detected by measuring the voltage V1 generated on the basis of the Nernst's equation, by the aid of the voltmeter 78.

The detected value of the partial pressure of oxygen is used to control the pumping voltage of the variable power source 70 by the aid of a feedback control system 92. Specifically, the pumping operation performed by the main pumping cell 68 is controlled so that the partial pressure of oxygen in the first chamber 60 has a predetermined value which is sufficiently low to control the partial pressure of oxygen in the second chamber 62 in the next step.

The inner pumping electrode 64 and the outer pumping electrode 66 are composed of an inactive material having a low catalytic activity on NOx, for example, NO in the measurement gas introduced in the first chamber 60. Specifically, the inner pumping electrode 64 and the outer pumping electrode 66 can be composed of a porous cermet electrode. In this embodiment, they are formed of a metal such as Pt and a ceramic such as $ZrO_2$. Especially, it is necessary, for the inner pumping electrode 64 and the measuring electrode 72 arranged in the first chamber 60 contacting with the measurement gas, to use a material having a weak reducing ability or no reducing ability with respect to the NOx components in the measurement gas. It is preferable that the inner pumping electrode 64 and the measuring electrode 72 are composed of, for example, a compound having the perovskite structure such as $La_3CuO_4$, a cermet comprising a ceramic and a metal having a low catalytic activity such as Au, or a cermet comprising a ceramic, a metal of the Pt group, and a metal having a low catalytic activity such as Au. Further, when an alloy comprising Au and a metal of the Pt group is used as an electrode material, it is preferable to add Au in an amount of 0.03 to 35 vol% of the entire metal components.

The gas sensor according to the first embodiment includes a detecting electrode 80 composed of a porous cermet electrode having a flat and substantially rectangular shape. The detecting electrode 80 is formed on a portion separated from the second diffusion rate-determining section 58, of the upper surface of the first solid electrolyte layer 52d for forming the second chamber 62. An electrochemical pumping cell, i.e., a measuring pumping cell 82 is constructed by the detecting electrode 80, the reference electrode 74, and the first solid electrolyte layer 52d.

The detecting electrode 80 can be constructed by appropriately selecting a nitrogen oxide-decomposing catalyst, for example, an Rh cermet, a material having a low catalytic activity, or a combination of a nitrogen oxide-decomposing catalyst arranged in the vicinity of a material having a low catalytic activity. In this embodiment, the detecting electrode 80 is composed of a porous cermet comprising Rh as a metal capable of reducing NOx as the measurement gas component, and zirconia as a ceramic. Thus the detecting electrode 80 functions as a NOx-reducing catalyst for reducing NOx existing in the atmosphere in the second chamber 62. Moreover, the oxygen in the atmosphere in the second chamber 62 can be pumped out to the reference gas-introducing chamber 54 by applying a constant voltage Vp2 between the detecting electrode 80 and the reference electrode 74 by the aid of a DC power source 84. A pumping current Ip2, which is allowed to flow in accordance with the pumping operation performed by the measuring pumping cell 82, is detected by an ammeter 86.

The gas sensor according to the first embodiment includes a heater 88 for generating heat in accordance with electric power supply from the outside. The heater 88 is embedded in a form of being vertically interposed between the first and second substrate layers 52a, 52b. The heater 88 is provided in order to increase the conductivity of oxygen ion. A ceramic layer 90 composed of alumina or the like is formed to cover upper and lower surfaces of the heater 88 so that the heater 88 is electrically insulated from the substrate layers 52a, 52b.

The heater 88 is arranged to extend over an entire region ranging from the first chamber 60 to the second chamber 62. Thus the first and second chambers 60, 62 are heated to predetermined temperatures respectively. Further, the main pumping cell 68, the controlling oxygen partial pressure-detecting cell 76, and the measuring pumping cell 82 are also heated to and maintained at predetermined temperatures respectively.

The NOx sensor 50A according to the first embodiment is basically constructed as described above. Next, its function and effect will be explained.

Before the measurement of NOx, the NOx sensor 50A according to the first embodiment is set in a state in which the measurement gas can be introduced into the first chamber 60. Next, an electric power is applied to the heater 88 so that the first and second solid electrolyte layers 52d, 52f for the first chamber 60 of the NOx sensor 50A are heated to 400 °C to 900 °C, and the first and second solid electrolyte layers 52d, 52f for the second chamber 62 are heated to 700 °C to 900 °C. After the NOx sensor 50A is heated in such a temperature state, the first and second solid electrolyte layers 52d, 52f are activated in a desired state.

Next, the measurement of NOx contained in the measurement gas is started by introducing the measurement gas into the NOx sensor 50A having been set as described above. The measurement gas is introduced into the first chamber 60 under a predetermined diffusion resistance through the first diffusion rate-determining section 56. The partial pressure of oxygen contained in the measurement gas is controlled to have a predetermined value in accordance with a predetermined pumping voltage Vp1 applied between the outer pumping electrode 66 and the inner pumping electrode 64 by the aid of the variable power source 70. In the case of the NOx sensor according to the first embodiment, the partial pressure of oxygen in the first chamber 60 is controlled to be $1.2 \times 10^{-8}$ atm to $3.9 \times 10^{-5}$ atm.

The partial pressure of oxygen in the first chamber 60 can be measured on the basis of a voltage V1 between the reference electrode 74 and the measuring electrode 72, detected by the voltmeter 78. The voltage V1 is an electromotive force of the oxygen concentration cell defined by the Nernst's equation described above. The pumping voltage Vpl applied by the variable power source 70 is controlled by the aid of the feedback control system 92 so that the voltage V1 is 180 mV to 350 mV. Thus the partial pressure of oxygen in the first chamber 60 is controlled to be $1.2 \times 10^{-8}$ atm to $3.9 \times 10^{-5}$ atm.

The measurement gas, which has been controlled to have the predetermined partial pressure of oxygen in the first chamber 60, is introduced into the second chamber 62 through the second diffusion rate-determining section 58 designed to have a diffusion resistance larger than that of the first diffusion rate-determining section 56.

A predetermined pumping voltage Vp2, which makes it possible to sufficiently pump out the oxygen in the second chamber 62, is applied between the reference electrode 74 and the detecting electrode 80 in the second chamber 62. Owing to the pumping voltage Vp2, NOx contained in the measurement gas, such as NO and $NO_2$, is decomposed by the detecting electrode 80 which serves as a nitrogen oxide-decomposing catalyst comprising the Rh cermet. Alternatively, NOx is decomposed by a catalyst existing separately from the detecting electrode 80. The oxygen thus produced is pumped out toward the reference gas-introducing space 54 through the first solid electrolyte layer 52d. In this process, a current value Ip2, which is generated by movement of oxygen ion, is measured by the ammeter 86. The concentration of NOx contained in the measurement gas is determined from the current value Ip2.

In the NOx sensor 50A according to the first embodiment, the inner pumping electrode 64 in the first chamber 60 is composed of an inactive material having a low catalytic activity on nitrogen oxides, such as a cermet comprising a ceramic and Au or a noble metal added with Au, or a material having the perovskite structure. Further, the pumping voltage Vp1, which is applied between the inner pumping electrode 64 and the outer pumping electrode 66 for the first chamber 60, is controlled so that the partial pressure of oxygen in the first chamber 60 is $1.2 \times 10^{-8}$ atm to $3.9 \times 10^{-5}$ atm, preferably $1.2 \times 10^{-8}$ atm to $5.8 \times 10^{-6}$ atm. Thus the concentration of NOx contained in the measurement gas can be measured with an extremely high degree of accuracy.

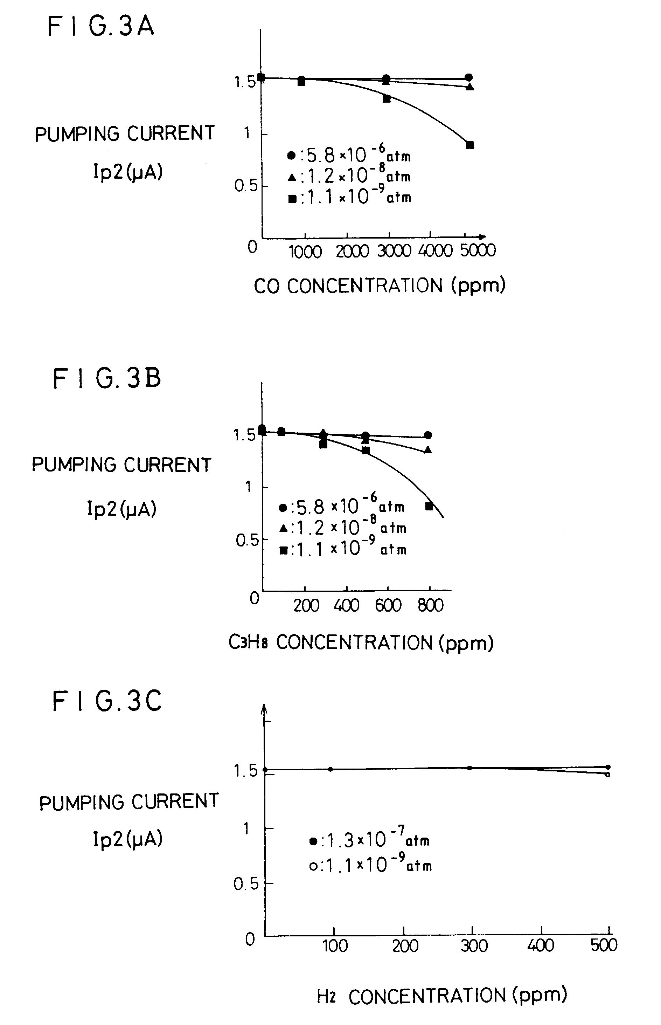

FIGs. 3A to 3C shows results obtained by measuring the current value Ip2 by using a measurement gas having a constant concentration of NOx contained therein. The current value Ip2 was measured at partial pressures of oxygen in the first chamber 60 of $5.8 \times 10^{-6}$ atm, $1.2 \times 10^{-8}$ atm, and $1.1 \times 10^{-9}$ atm adjusted by the pumping process performed by the main pumping cell 68, while changing respective concentrations of CO, $C_3H_8$, and $H_2$ to serve as an inflammable gas in the measurement gas. In this experiment, the current value Ip2 scarcely changed in a range of the partial pressure of oxygen in the first chamber 60 from $5.8 \times 10^{-6}$ atm to $1.2 \times 10^{-8}$ atm, regardless of the concentration of the inflammable gas. Accordingly, it is understood that NOx can be measured in a stable manner. This fact can be explained as follows.

If the partial pressure of oxygen in the first chamber 60 is lower than $1.2 \times 10^{-8}$ atm, reactions occur between the inflammable gases and NOx in the first chamber 60. Namely, it is assumed, for example, that the following burning reactions of NO occur.

$$H_2 + NO \rightarrow H_2O + (1/2)N_2$$

$$CO + NO \rightarrow CO_2 + (1/2)N_2$$

$$CnHm + (2n+m/2)NO \rightarrow nCO_2 + (m/2)H_2O + (n+m/4)N_2$$

Therefore, the amount of NOx detected in the second chamber 62 is decreased in an amount corresponding to those subjected to the burning reactions.

On the contrary, when the predetermined amount of $O_2$ is allowed to remain in the first chamber 60 so that the partial pressure of oxygen in the first chamber 60 is not less than $1.2 \times 10^{-8}$ atm, the inflammable gases react with the remaining $O_2$ in the first chamber 60. Thus, it is assumed, for example, that the following burning reactions occur.

$$H_2 + (1/2)O_2 \rightarrow H_2O$$

$$CO + (1/2)O_2 \rightarrow CO_2$$

$$CnHm + (n+m/2)O_2 \rightarrow nCO_2 + (m/2)H_2O$$

Therefore, the decomposition reaction of NOx, which would be otherwise caused by the inflammable gases, is suppressed. Further, the inactive material having the low catalytic activity on NOx is used for the inner pumping electrode 64 to which the pumping voltage Vp1 is applied. Accordingly, it is possible to remarkably decrease the ratio of decomposition of NOx itself on the inner pumping electrode 64, which would be otherwise caused by the pumping of $O_2$. Therefore, the measurement gas having no fluctuation of NOx concentration is introduced into the second chamber 62.

On the other hand, if the partial pressure of oxygen remaining in the first chamber 60 is excessively high, unnecessary $O_2$ is introduced into the second chamber 62 exactly. As a result, an offset occurs in a measured value of NOx. Therefore, it is necessary to set an upper limit for the partial pressure of oxygen.

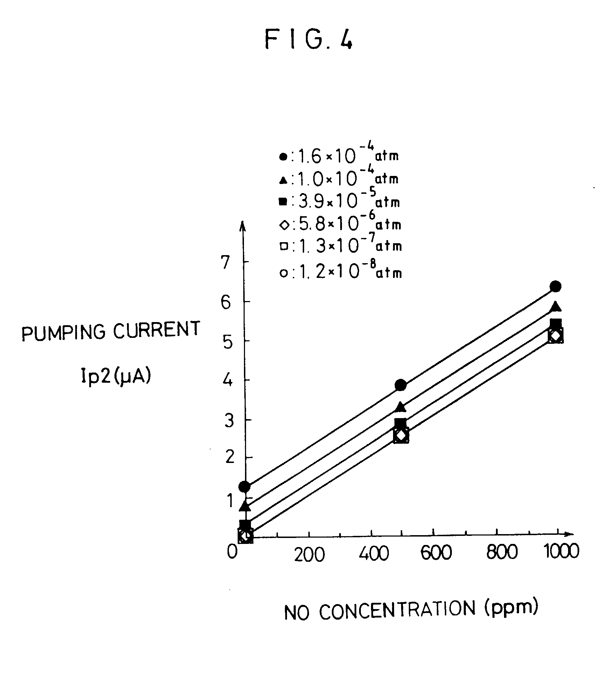

FIG. 4 shows results obtained by measuring the current value Ip2. The current value Ip2 was measured at partial pressures of oxygen in the first chamber 60 of $1.6 \times 10^{-4}$ atm, $1.0 \times 10^{-4}$ atm, $3.9 \times 10^{-5}$ atm, $5.8 \times 10^{-6}$ atm, $1.3 \times 10^{-7}$ atm, and $1.2 \times 10^{-8}$ atm, while changing the concentration of NO in the measurement gas.

In this case, when the partial pressure of oxygen in the first chamber 60 is not more than $3.9 \times 10^{-5}$ atm, the offset can be not more than 10 ppm as calculated as a concentration of NO. For example, when the NOx sensor 50A is assumed to have a measurement range of 0 to 1000 ppm, the offset is 1 %. Thus NO can be measured with an extremely high degree of accuracy.

According to the results described above, the pumping voltage Vpl applied to the main pumping cell 68 is set in a range in which the partial pressure of oxygen in the first chamber 60 is $3.9 \times 10^{-5}$ atm to $1.2 \times 10^{-8}$ atm. Thus NOx can be measured highly accurately in a broad measurement range without causing any significant offset.

The NOx sensor 50A according to the first embodiment can measure NOx containing not only NO but also $NO_2$, with an extremely high degree of accuracy. This fact will be explained below.

If it is assumed, for example, that decomposition of NO and $NO_2$ occurs only in the second chamber 62, NO undergoes the following reaction.

$$NO \rightarrow (1/2)N_2 + (1/2)O_2$$

On the other hand, $NO_2$ undergoes the following reaction.

$$NO_2 \rightarrow (1/2)N_2 + O_2$$

Therefore, the current value Ip2 for the second chamber 62 obtained in the case of only $NO_2$ should be two times that obtained in the case of only NO. However, in fact, when measurement was performed under a condition in which the inner pumping electrode 64 in the first chamber 60 was composed of Pt, an output obtained from $NO_2$ was about 80 % of an output obtained from NO. Probably, such a result was obtained because of the following two reasons. Firstly, the following reaction occurs on the inner pumping electrode 64 composed of Pt.

$$NO_2 \rightarrow NO + (1/2)O_2$$

Secondly, the diffusion coefficient of $NO_2$ is smaller than that of NO, and hence all of $NO_2$ contained in the measurement gas does not arrive at the second chamber 62 during the measurement. Thus the concentration of $NO_2$ was measured under a condition in which the inner electrode 64 was composed of an inactive material having a low catalytic activity on NOx. As a result, an obtained output was 90 % of a target value.

According to the foregoing consideration, the decomposition reaction of $NO_2$ in the first chamber 60 can be suppressed by using the inner pumping electrode 64 composed of an inactive material having a low catalytic activity on NOx, and setting a considerably high value for the partial pressure of oxygen in the first chamber 60. Thus it is possible to increase the sensitivity of the NOx sensor 50A to $NO_2$. Therefore, it is possible to increase the sensitivity to $NO_2$ as compared with NO by appropriately adjusting the pumping voltage Vp1 applied between the inner pumping electrode 64 and the outer pumping electrode 66 by the aid of the variable power source 70, in a range in which the partial pressure of oxygen in the first chamber 60 is not less than $1.2 \times 10^{-8}$ atm. As a result, NOx containing NO and $NO_2$ can be measured with a high degree of accuracy by using the NOx sensor 50A.

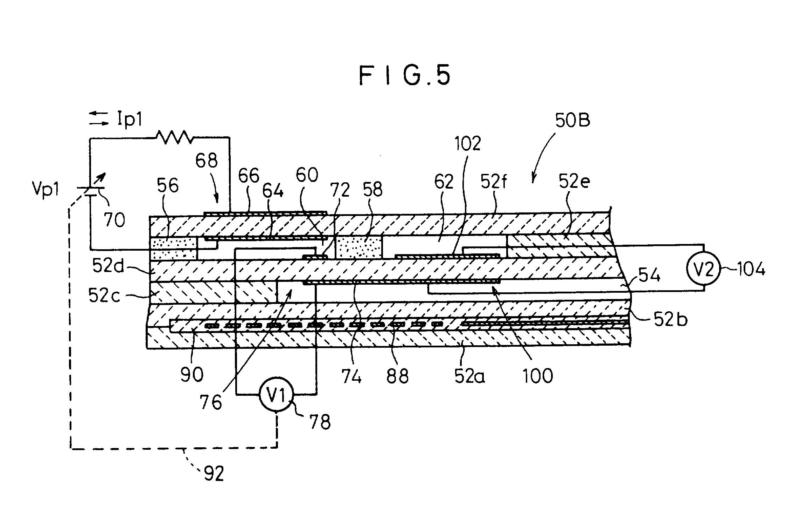

Next, a NOx sensor 50B according to a second embodiment will be explained with reference to FIG. 5. Components or parts of the NOx sensor 50B corresponding to those shown in FIG. 2 are designated by the same reference numerals, duplicate explanation of which will be omitted.

As shown in FIG. 5, the NOx sensor 50B according to the second embodiment has approximately the same structure as that of the NOx sensor 50A according to the first embodiment. However, the former is different from the latter in that a measuring oxygen partial pressure-detecting cell 100 is provided in place of the measuring pumping cell 82.

The measuring oxygen partial pressure-detecting cell 100 comprises a detecting electrode 102 formed on a portion for forming the second chamber 62, of the upper surface of the first solid electrolyte layer 52d, the reference electrode 74 formed on the lower surface of the first solid electrolyte layer 52d, and the first solid electrolyte layer 52d.

In this embodiment, an electromotive force (electromotive force of an oxygen concentration cell) V2 is generated between the detecting electrode 102 and the reference electrode 74 of the measuring oxygen partial pressure-detecting cell 100, corresponding to a difference in oxygen concentration between an atmosphere around the detecting electrode 102 and an atmosphere around the reference electrode 74.

Therefore, the partial pressure of oxygen in the atmosphere around the detecting electrode 102, in other words, the partial pressure of oxygen defined by oxygen produced by reduction or decomposition of the measurement gas components (NOx) is detected as a value of the voltage V2 by measuring the electromotive force (voltage) V2 generated between the detecting electrode 102 and the reference electrode 74.

The degree of change in electromotive force V2 represents the NO concentration. Namely, the electromotive force V2, which is outputted from the measuring oxygen partial pressure-detecting cell 100 constructed by the detecting electrode 102, the reference electrode 74, and the first solid electrolyte layer 52d, represents the NO concentration in the measurement gas.

The pumping voltage Vpl, which is applied between the inner pumping electrode 64 and the outer pumping electrode 66 by the aid of the variable power source 70 in the NOx sensor 50B according to the second embodiment, is also appropriately adjusted in a range in which the partial pressure of oxygen in the first chamber 60 is not less than $1.2 \times 10^{-8}$ atm. Accordingly, it is possible to increase the sensitivity to $NO_2$ with reference to NO. Thus NOx containing NO and $NO_2$ can be measured with a high degree of accuracy by using the NOx sensor 50B.

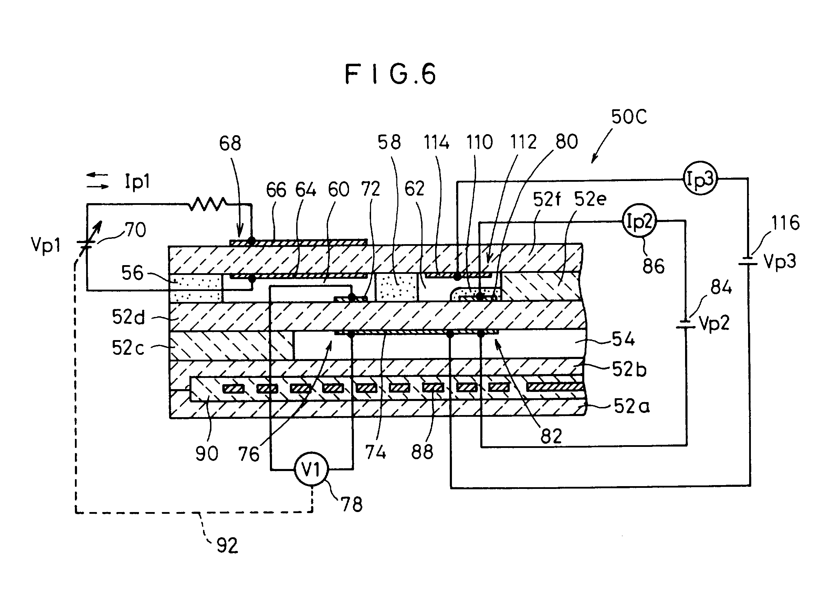

Next, a NOx sensor 50C according to a third embodiment will be explained with reference to FIG. 6. Components or parts of the NOx sensor 50C corresponding to those shown in FIG. 2 are designated by the same reference numerals, duplicate explanation of which will be omitted.

As shown in FIG. 6, the NOx sensor 50C according to the third embodiment has approximately the same structure as that of the NOx sensor 50A according to the first embodiment (see FIG. 2). However, the former is different from the latter in that a porous $Al_2O_3$ layer or a porous $ZrO_2$ layer for constructing a third diffusion rate-determining section 110 is formed to cover the detecting electrode 80, and an auxiliary pumping cell 112 is provided.

The auxiliary pumping cell 112 comprises an auxiliary pumping electrode 114 composed of a porous cermet electrode having a flat and substantially rectangular shape and formed on an entire surface portion for forming the second chamber 62, of the lower surface of the second solid electrolyte layer 52f, the reference electrode 74, the second solid electrolyte layer 52f, the second spacer layer 52e, and the first solid electrolyte layer 52d.

The auxiliary pumping electrode 114 is constructed by using a material having a weak reducing ability or no reducing ability with respect to the NOx components in the measurement gas, in the same manner as the inner pumping electrode 64 of the main pumping cell 68. In this embodiment, it is preferable that the auxiliary pumping electrode 114 is composed of, for example, a compound having the perovskite structure such as $La_3CuO_4$, a cermet comprising a ceramic and a metal having a low catalytic activity such as Au, or a cermet comprising a ceramic, a metal of the Pt group, and a metal having a low catalytic activity such as Au. Further, when an alloy comprising Au and a metal of the Pt group is used as an electrode material, it is preferable to add Au in an amount of 0.03 to 35 vol% of the entire metal components.

A desired constant voltage Vp3 is applied between the auxiliary pumping electrode 114 and the reference electrode 74 of the auxiliary pumping cell 112 by the aid of an external power source 116. Thus the oxygen in the atmosphere in the second chamber 62 can be pumped out to the reference gas-introducing space 54.

Accordingly, the partial pressure of oxygen in the atmosphere in the second chamber 62 is in a situation in which the measurement gas components (NOx) are not substantially reduced or decomposed, while giving a low value of the partial pressure of oxygen at which the measurement of the amount of the objective components is not substantially affected. In this embodiment, the change in amount of oxygen introduced into the second chamber 62 is greatly reduced as compared with the change which occurs in the measurement gas, owing to the operation of the main pumping cell 68 in the first chamber 60. Therefore, the partial pressure of oxygen in the second chamber 62 is controlled accurately and constantly.

The NOx sensor 50C according to the third embodiment includes the constant voltage (DC) power source 84. NOx flows into the measuring pumping cell 82 while being limited by the third diffusion rate-determining section 110. Under this condition, the constant voltage (DC) power source 84 is capable of applying a voltage having a magnitude to give a limiting current for pumping to be performed for oxygen produced during decomposition in the measuring pumping cell 82.

Therefore, in the NOx sensor 50C according to the third embodiment constructed as described above, the measurement gas, which has been controlled for its partial pressure of oxygen in the second chamber 62, is introduced into the detecting electrode 80 under a predetermined diffusion resistance through the third diffusion rate-determining section 110.

When it is intended to control the partial pressure of oxygen in the atmosphere in the first chamber 60 to have a low value of the partial pressure of oxygen which does not substantially affect the measurement of NOx, by operating the main pumping cell 68, in other words, when the pumping voltage Vp1 of the variable power source 70 is adjusted by the aid of the feedback control system 92 so that the voltage V1 detected by the controlling oxygen partial pressure-detecting cell 76 is constant, if the oxygen concentration in the measurement gas greatly changes, for example, in a range of 0 to 20 %, then the respective partial pressures of oxygen in the atmosphere in the second chamber 62 and in the atmosphere in the vicinity of the detecting electrode 80 slightly change in ordinary cases. This phenomenon is caused probably because of the following reason. Namely, when the oxygen concentration in the measurement gas increases, the distribution of the oxygen concentration occurs in the widthwise direction and the thickness direction in the first chamber 60 over the measuring electrode 72. The distribution of the oxygen concentration changes depending on the oxygen concentration in the measurement gas.

However, in the case of the gas sensor 50C according to the third embodiment, the auxiliary pumping cell 112 is provided for the second chamber 62 so that the partial pressure of oxygen in its internal atmosphere always has a constant low value of the partial pressure of oxygen. Accordingly, even when the partial pressure of oxygen in the atmosphere introduced from the first chamber 60 to the second chamber 62 changes depending on the oxygen concentration in the measurement gas, the partial pressure of oxygen in the atmosphere in the second chamber 62 can be always made to have a constant low value, owing to the pumping operation performed by the auxiliary pumping cell 112. As a result, the partial pressure of oxygen can be controlled to have a low value at which the measurement of NOx is not substantially affected.

NOx in the measurement gas introduced into the detecting electrode 80 is reduced or decomposed around the detecting electrode 80. Thus, for example, a reaction of $NO \rightarrow 1/2N_2 + 1/2O_2$ is allowed to occur. In this process, a predetermined voltage Vp2, for example, 430 mV (700 °C) is applied between the detecting electrode 80 and the reference electrode 74 for constructing the measuring pumping cell 82, in a direction to pump out the oxygen from the second chamber 62 to the reference gas-introducing space 54.

Therefore, the pumping current Ip2 flowing through the measuring pumping cell 82 has a value which is proportional to a sum of the oxygen concentration in the atmosphere introduced into the second chamber 62, i.e., the oxygen concentration in the second chamber 62 and the oxygen concentration produced by reduction or decomposition of NOx by the aid of the detecting electrode 80.

In this embodiment, the oxygen concentration in the atmosphere in the second chamber 62 is controlled to be constant by means of the auxiliary pumping cell 112. Accordingly, the pumping current Ip2 flowing through the measuring pumping cell 82 is proportional to the NOx concentration. The NOx concentration corresponds to the amount of diffusion of NOx limited by the third diffusion rate-determining section 110. Therefore, even when the oxygen concentration in the measurement gas greatly changes, it is possible to accurately measure the NOx concentration, based on the use of the measuring pumping cell 82 by the aid of the ammeter 86.

It is assumed, for example, that the partial pressure of oxygen in the atmosphere in the second chamber 62 controlled by the auxiliary pumping cell 112 is 0.02 ppm, and the concentration of NO as the NOx component in the measurement gas is 100 ppm. The pumping current Ip2 flows in an amount corresponding to a sum (= 50.02 ppm) of an oxygen concentration of 50 ppm produced by reduction or decomposition of NO and the oxygen concentration of 0.02 ppm in the atmosphere in the second chamber 62. Therefore, almost all of the pumping current value Ip2 obtained by operating the measuring pumping cell 82 represents the amount brought about by the reduction or decomposition of NO. Accordingly, the obtained result does not depend on the oxygen concentration in the measurement gas.

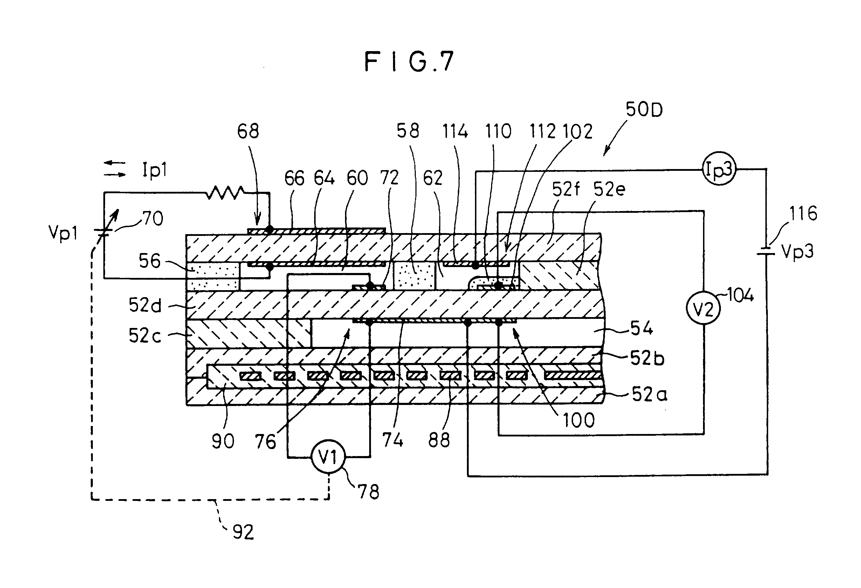

Next, a NOx sensor 50D according to a fourth embodiment will be explained with reference to FIG. 7. Components or parts of the NOx sensor 50D corresponding to those shown in FIGs. 5 and 6 are designated by the same reference numerals, duplicate explanation of which will be omitted.

As shown in FIG. 7, the NOx sensor 50D according to the fourth embodiment has approximately the same structure as that of the NOx sensor 50B according to the second embodiment (see FIG. 5). However, the former is different from the latter in that a porous $Al_2O_3$ layer or a porous $ZrO_2$ layer for constructing a third diffusion rate-determining section 110 is formed to cover the detecting electrode 102 of the measuring oxygen partial pressure-detecting cell 100, and an auxiliary pumping cell 112 is provided, in the same manner as the NOx sensor 50C according to the third embodiment (see FIG. 6).

In this embodiment, the partial pressure of oxygen in the atmosphere in the second chamber 62 is in a situation in which the measurement gas components (NOx) are not substantially reduced or decomposed, while giving a low value of the partial pressure of oxygen at which the measurement of the amount of the objective components is not substantially affected, in the same manner as the NOx sensor 50C according to the third embodiment. The change in amount of oxygen introduced into the second chamber 62 is greatly reduced as compared with the change which occurs in the measurement gas, owing to the operation of the main pumping cell 68 in the first chamber 60. Therefore, the partial pressure of oxygen in the second chamber 62 is controlled accurately and constantly.

Therefore, even when the oxygen concentration in the measurement gas greatly changes, it is possible to accurately measure the NOx concentration, based on the use of the measuring oxygen partial pressure-detecting cell 100 by the aid of the voltmeter 104.

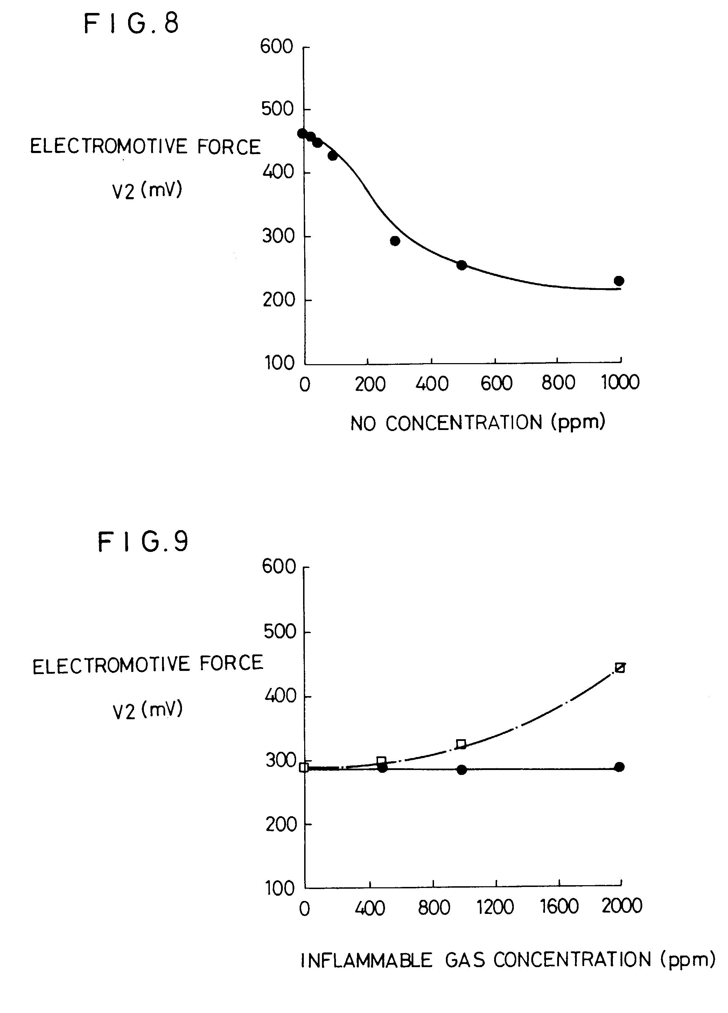

Now, the principle of detection performed by the NOx sensor 50D according to the fourth embodiment will be explained with reference to FIG. 8 illustrating a characteristic of the NOx sensor 50D.

At first, when the NO concentration in the external space is 0 ppm, the pumping voltage Vpl of the main pumping cell 68 is controlled so that the partial pressure of oxygen in the first chamber 60 is maintained to be $1.3 \times 10^{-7}$ atm, i. e., to give a value of the electromotive force V1 = about 300 mV.

Next, the set voltage Vp3 applied to the auxiliary pumping cell 112 is set to be 460 mV. The partial pressure of oxygen in the second chamber 62 is controlled to be $6.1 \times 10^{-11}$ atm owing to the operation performed by the auxiliary pumping cell 112. As a result, the electromotive force V2 between the detecting electrode 102 and the reference electrode 74 of the measuring oxygen partial pressure-detecting cell 100 is about 460 mV. In this case, the inflammable gas components are oxidized in the first chamber 60, and the sensitivity to NOx is not affected thereby, because the partial pressure of oxygen in the first chamber 60 is $1.3 \times 10^{-7}$ atm, regardless of the fact that the partial pressure of oxygen in the second chamber 62 is $6.1 \times 10^{-11}$ atm.

If the NO concentration in the external space gradually increases, the reduction or decomposition reaction of NO is caused on the detecting electrode 102, because the detecting electrode 102 also functions as a NOx-reducing catalyst in the same manner as the detecting electrode 80 of the measuring pumping cell 82 described above (see FIG. 2). As a result, the oxygen concentration in the atmosphere around the detecting electrode 102 is increased. Accordingly, the electromotive force V2 generated between the detecting electrode 102 and the reference electrode 74 is gradually decreased. With reference to FIG. 8 illustrating the characteristic of the NOx sensor 50D, for example, when the NO concentration increases to 300 ppm, 500 ppm, and 1000 ppm, the electromotive force V2 detected by the voltmeter 104 is gradually decreased to 300 mV, 250 mV, and 220 mV respectively.

Thus the degree of the decrease in electromotive force V2 represents the NO concentration. Namely, the electromotive force V2, which is outputted from the measuring oxygen partial pressure-detecting cell 100 constructed by the detecting electrode 102, the reference electrode 74, and the first solid electrolyte layer 52d, represents the NO concentration in the measurement gas.

FIG. 9 relates to designed Example and Comparative Example. FIG. 9 shows the change in electromotive force V2 generated from the measuring oxygen partial pressure-detecting cell 100 by changing the inflammable gas concentration (THC) contained in the external space from 0 ppm to 2000 ppm under a condition designed for Example or Comparative Example. In FIG. 9, a characteristic curve obtained in Example is shown by a solid line, and a characteristic curve obtained in Comparative Example is shown by a chain line.

The characteristic curve concerning Example was obtained by using the same system as that of the NOx sensor 50D according to the fourth embodiment, provided that the main pumping cell 68 was controlled so that a value of the electromotive force V1 of 300 mV was generated by the controlling oxygen partial pressure-detecting cell 76. The characteristic curve concerning Comparative Example was obtained by using the same system as that of the NOx sensor 50D according to the fourth embodiment, provided that the main pumping cell 68 was controlled so that a value of the electromotive force V1 of 450 mV was generated by the controlling oxygen partial pressure-detecting cell 76.

The following facts are clarified according to the results shown in FIG. 9. Namely, in Comparative Example, the electromotive force V2 generated in the measuring oxygen partial pressure-detecting cell 100 is increased as the inflammable gas concentration is increased. When the inflammable gas concentration is 0 %, for example, the electromotive force V2 is 300 mV. However, when the inflammable gas concentration is 2000 ppm, the electromotive force V2 is 450 mV which corresponds to, in FIG. 8, a value of the electromotive force V2 obtained at a NO concentration = 0 ppm. Probably, this is because of the following reasons. Namely, in Comparative Example, the main pumping cell 68 is operated to perform control so that the electromotive force V1 of the controlling oxygen partial pressure-detecting cell 76 is 450 mV, i.e., the partial pressure of oxygen in the first chamber 60 is low. Therefore, the reactions between the inflammable gases and NOx occur in the first chamber 60, and the following burning reactions of NO occur in the same manner as described for the NOx sensor 50A according to the first embodiment.

$$H_2 + NO \rightarrow H_2O + (1/2)N_2$$

$$CO + NO \rightarrow CO_2 + (1/2)N_2$$

$$CnHm + (2n+m/2)NO \rightarrow nCO_2 + (m/2)H_2O + (n+m/4)N_2$$

On the contrary, in Example, the electromotive force V2 generated by the measuring oxygen partial pressure-detecting cell 100 scarcely changes even when the inflammable gas concentration changes in a range of 0 to 2000 ppm. Probably, this is because of the following reasons. Namely, the main pumping cell 68 is operated to perform control so that the electromotive force V1 of the controlling oxygen partial pressure-detecting cell 76 is 300 mV, i.e., a predetermined amount of $O_2$ is allowed to remain in the first chamber 60. Therefore, the inflammable gasses react with the remaining $O_2$ in the first chamber 60 in the same manner as described for the NOx sensor 50A according to the first embodiment. Accordingly, for example, the following burning reactions occur.

$$H_2 + (1/2)O_2 \rightarrow H_2O$$

$$CO + (1/2)O_2 \rightarrow CO_2$$

$$CnHm + (n+m/2)O_2 \rightarrow nCO_2 + (m/2)H_2O$$

As a result, the decomposition reaction of NOx, which would be otherwise caused by the inflammable gases, is suppressed. Further, the inactive material having the low catalytic activity on NOx is used for the inner pumping electrode 64 to which the pumping voltage Vp1 is applied. Accordingly, it is possible to remarkably decrease the ratio of decomposition of NOx itself on the inner pumping electrode 64, caused by the pumping for $O_2$. Namely, the measurement gas, which suffers no variation in NOx concentration, is introduced into the second chamber 62.

Therefore, when the NO component is contained in the measurement gas, the electromotive force V2 corresponding to the amount of NO is generated between the detecting electrode 102 and the reference electrode 74 for constructing the measuring oxygen partial pressure-detecting cell 100. Thus the amount of NO can be correctly determined by detecting the electromotive force V2.

It is a matter of course that the NOx sensor according to this invention is not limited to the embodiments described above, which can be constructed in other various forms within the scope of the invention.

**Claims**

1. A nitrogen oxide sensor comprising:

a main pumping means (68) including a solid electrolyte (52f) for contacting with external space, and inner and outer electrodes (64, 66) formed on inner and outer surfaces of said solid electrolyte (52f), for performing a pumping process for oxygen contained in a measurement gas introduced from said external space, on the basis of a control voltage (Vp1) applied between said electrodes (64, 66);
a main pumping control means (92) for adjusting a level of said control voltage (Vp1) so that a partial pressure of oxygen brought about by said pumping process performed by said main pumping means (68) is not less than $1 \times 10^{-8}$ atm; and
an electric signal-generating conversion means including a solid electrolyte (52d) and inner and outer detecting electrodes (80 or 102, 74) provided in contact with said solid electrolyte (52d), for providing, by conversion, an electric signal (Ip2 or V2) corresponding to an amount of oxygen contained in said measurement gas after being subjected to said pumping process performed by said main pumping means (68), wherein:
nitrogen oxides in said measurement gas are measured on the basis of said electric signal (Ip2 or V2) supplied from said electric signal-generating conversion means.

2. The nitrogen oxide sensor according to claim 1, wherein said electric signal-generating conversion means further comprises:

a measuring pumping means (82) including said solid electrolyte (52d), said inner detecting electrode (80) formed on said solid electrolyte (52d), and said outer electrode (74) formed on said solid electrolyte (52d) on a side opposite to said inner detecting electrode (80), for performing a pumping process for said oxygen contained in said measurement gas after being subjected to said pumping process performed by said main pumping means (68), on the basis of a measuring voltage (Vp2) applied between said inner and outer detecting electrodes (80, 74); and
a current-detecting means (86) for detecting a pumping current (Ip2) generated corresponding to an amount of said oxygen subjected to said pumping process performed by said measuring pumping means (82), wherein: said nitrogen oxides in said measurement gas are measured on the basis of said pumping current (Ip2) detected by said current-detecting means (86).

3. The nitrogen oxide sensor according to claim 2, wherein said measuring pumping means (82) performs said pumping process for said oxygen produced by any one of or both of actions of application of a voltage sufficient to decompose said nitrogen oxides between said inner and outer detecting electrodes (80, 74), and a nitrogen oxide-decomposing catalyst arranged in said measuring pumping means (82), on the basis of said measuring voltage (Vp2) applied between said inner and outer detecting electrodes (80, 74).

4. The nitrogen oxide sensor according to claim 3, wherein said nitrogen oxide-decomposing catalyst is an Rh cermet.

5. The nitrogen oxide sensor according to claim 1, wherein said electric signal-generating conversion means further comprises:

a concentration-detecting means (100) including said solid electrolyte (52d), an inner detecting electrode (102) formed on said solid electrolyte (52d), and said outer detecting electrode (74) formed on said solid electrolyte (52d) on a side opposite to said inner detecting electrode (102), for generating an electromotive force (V2) corresponding to a difference between said amount of oxygen contained in said measurement gas after being subjected to said pumping process performed by said main pumping means (68) and an amount of oxygen contained in a gas existing on a side of said outer detecting electrode (74); and
a voltage-detecting means (104) for detecting said electromotive force (V2) generated by said concentration-detecting means (100), wherein:
said nitrogen oxides in said measurement gas are measured on the basis of said electromotive force (V2) detected by said voltage-detecting means (104).

6. The nitrogen oxide sensor according to claim 5, wherein said concentration-detecting means (100) generates said electromotive force (V2) of an oxygen concentration cell, corresponding to a difference in partial pressure between oxygen produced by an action of a nitrogen oxide-decomposing catalyst arranged in said concentration-detecting means (100) and said oxygen contained in said gas existing on said side of said outer detecting electrode (74).

7. The nitrogen oxide sensor according to claim 6, wherein said nitrogen oxide-decomposing catalyst is an Rh cermet.

8. The nitrogen oxide sensor according to any one of claims 1 to 7, further comprising a concentration-measuring means (76) including said solid electrolyte (52d), an inner measuring electrode (72) formed on said solid electrolyte (52d) to be opposed to said inner pumping electrode (64) of said main pumping means (68) or on an identical plane therewith, and an outer measuring electrode (74) formed on said solid electrolyte (52d) on a side opposite to said inner measuring electrode (72), for measuring an electromotive force (V1) of an oxygen concentration cell, generated corresponding to a difference in partial pressure between oxygen produced by said pumping process performed by said main pumping means (68) and oxygen contained in a gas existing on a side of said outer measuring electrode (74), wherein:
said main pumping control means (92) adjusts said control voltage (Vp1) for said main pumping means (68) on the basis of said electromotive force (V1) detected by said concentration-measuring means (76).

9. The nitrogen oxide sensor according to any one of claims 1 to 8, further comprising an auxiliary pumping means (112) including an auxiliary pumping electrode (114) formed in the vicinity of said inner detecting electrode (80 or 102), wherein said oxygen contained in said measurement gas after being subjected to said pumping process performed by said main pumping means (68) is subjected to a pumping process on the basis of a voltage (Vp3) applied between said auxiliary pumping electrode (114) and said outer detecting electrode (74).

10. The nitrogen oxide sensor according to any one of claims 1 to 9, wherein said inner pumping electrode (64) of said main pumping means (68) comprises an inactive material having a low catalytic activity on said nitrogen oxides.

11. The nitrogen oxide sensor according to claim 10, wherein said inactive material is a cermet comprising a ceramic and Au or a noble metal added with Au.

12. The nitrogen oxide sensor according to claim 10, wherein said inactive material is a material having a perovskite structure.

13. The nitrogen oxide sensor according to any one of claims 1 to 12, wherein said partial pressure of oxygen controlled by said main pumping means (68) is $1 \times 10^{-8}$ to $1.7 \times 10^{-4}$ atm.

14. The nitrogen oxide sensor according to claim 13, wherein said partial pressure of oxygen controlled by said main pumping means (68) is $1 \times 10^{-8}$ to $3.5 \times 10^{-5}$ atm.

15. The nitrogen oxide sensor according to any one of claims 1 to 14, wherein said control voltage (Vp1) for said main pumping means (68) is set to be a voltage at which said partial pressure of oxygen controlled by said main pumping means (68) is not less than $1 \times 10^{-8}$ atm, so that said sensor has a detection sensitivity to $NO_2$ of 80 % to 120 % as compared with NO as said nitrogen oxide.

16. The nitrogen oxide sensor according to claim 15, wherein said control voltage (Vp1) for said main pumping means (68) is set to be a voltage at which said partial pressure of oxygen controlled by said main pumping means (68) is not less than $1 \times 10^{-8}$ atm, so that said sensor has a detection sensitivity to $NO_2$ of 90 % to 110 % as compared with NO as said nitrogen oxide.

17. The nitrogen oxide sensor according to any one of claims 8 to 16, wherein said outer measuring electrode (74) is arranged at a position exposed to a space (54) into which said reference gas is introduced.

18. The nitrogen oxide sensor according to any one of claims 8 to 17, comprising:

said electric signal-generating conversion means including said solid electrolyte (52d) and said inner and outer detecting electrodes (80 or 102, 74) provided in contact with said solid electrolyte (52d), for providing, by conversion, said electric signal (Ip2 or V2) corresponding to said amount of oxygen contained in said measurement gas after being subjected to said pumping process performed by said main pumping means (68), wherein:
said outer measuring electrode (74) and said outer detecting electrode (74) are combined into a common unit.

19. The nitrogen oxide sensor according to any one of claims 1 to 18, wherein said main pumping means (68) includes said inner and outer pumping electrodes (64, 66) formed at the inside and the outside of a first chamber (60) surrounded by substrates composed of solid electrolytes (52d, 52e, 52f), for introducing said measurement gas threreinto, and said substrate interposed between said both electrodes (64, 66); and
said electric signal-generating conversion means includes said detecting electrode (80 or 102) formed at the inside of a second chamber (62) surrounded by said substrates composed of said solid electrolytes (52d, 52e, 52f), for introducing said measurement gas thereinto after being subjected to said pumping process performed by said main pumping means (68), a reference electrode (74) formed at the inside of a reference gas-introducing space (54) surrounded by said substrates composed of said solid electrolytes (52d, 52e, 52f), for introducing a reference gas thereinto, and said substrate interposed between said detecting electrode (80 or 102) and said reference electrode (74).

20. The nitrogen oxide sensor according to claim 19, further comprising:

a first diffusion rate-determining section (56) for giving a predetermined diffusion resistance to said measurement gas, provided at a passage for introducing said measurement gas from said external space into said first chamber (60); and
a second diffusion rate-determining section (58) for giving a predetermined diffusion resistance to said measurement gas, provided at a passage for introducing said measurement gas into said second chamber (62) after being subjected to said pumping process performed by said main pumping means (68).

21. The nitrogen oxide sensor according to either claim 19 or claim 20, further comprising a third diffusion rate-determining section (110) for giving a predetermined diffusion resistance to said measurement gas, provided at a passage for allowing said measurement gas in said second chamber (62) to approach said detecting electrode (80 or 102).

22. The nitrogen oxide sensor according to any one of claims 19 to 21, further comprising a heating means (88) for heating said respective substrates for constructing said first and second chambers (60, 62) to predetermined temperatures.

**23.** The nitrogen oxide sensor according to claim 22, wherein said heating means (88) is used to heat said substrates (52d, 52e, 52f) for said first chamber (60) to 400 °C to 900 °C, and heat said substrates (52d, 52e, 52f) for said second chamber (62) to 700 °C to 900 °C.

# F I G.1

FIG. 2

F I G. 3A

PUMPING CURRENT

Ip2(μA)

● : 5.8 × 10$^{-6}$ atm
▲ : 1.2 × 10$^{-8}$ atm
■ : 1.1 × 10$^{-9}$ atm

CO CONCENTRATION (ppm)

F I G. 3B

PUMPING CURRENT

Ip2(μA)

● : 5.8 × 10$^{-6}$ atm
▲ : 1.2 × 10$^{-8}$ atm
■ : 1.1 × 10$^{-9}$ atm

C$_3$H$_8$ CONCENTRATION (ppm)

F I G. 3C

PUMPING CURRENT

Ip2(μA)

● : 1.3 × 10$^{-7}$ atm
○ : 1.1 × 10$^{-9}$ atm

H$_2$ CONCENTRATION (ppm)

# F I G. 4

EP 0 791 827 A1

# F I G . 5

FIG.6

# F I G.7

EP 0 791 827 A1

# F I G. 8

ELECTROMOTIVE FORCE

V2 (mV)

NO CONCENTRATION (ppm)

# F I G. 9

ELECTROMOTIVE FORCE

V2 (mV)

INFLAMMABLE GAS CONCENTRATION (ppm)

FIG.10

**European Patent Office**

## EUROPEAN SEARCH REPORT

Application Number

EP 97 30 1199

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 678 740 A (NGK INSULATORS LTD) 25 October 1995 <br> * column 11, line 21 - column 16, line 9 * <br> * column 21, line 7 - line 34 * <br> --- | 1-20 | G01N27/407 <br> G01N27/419 |
| A | EP 0 257 842 A (NGK INSULATORS LTD) 2 March 1988 <br> * claims * <br> --- | 1-23 | |
| A | US 5 217 588 A (WANG DA Y ET AL) 8 June 1993 <br> * column 2, line 15 - column 4, line 10 * <br> --- | 1-23 | |
| A | US 5 034 112 A (MURASE ISAO ET AL) 23 July 1991 <br> * column 1, line 63 - column 4, line 60 * <br> --- | 1-23 | |
| A | US 4 927 517 A (MIZUTANI YOSHIHIKO ET AL) 22 May 1990 <br> * column 1, line 48 - column 7, line 12 * <br> --- | 1-23 | |
| D,A | GB 2 288 873 A (MIDDLESEX UNIVERSITY SERVICES ;COPCUTT ROBERT CHARLES (GB); MASKEL) 1 November 1995 <br> * page 4 - page 6 * <br> --- | 1-23 | TECHNICAL FIELDS SEARCHED (Int.Cl.6) <br><br> G01N |
| P,A | EP 0 731 351 A (NGK INSULATORS LTD) 11 September 1996 <br> * claims * <br> --- | 1-23 | |
| P,A | DE 44 39 901 A (BOSCH GMBH ROBERT) 9 May 1996 <br> * column 2, line 29 - column 4, line 5 * <br> --- | 1-23 | |
| A | US 5 397 442 A (E.D. WACHSMAN) 14 March 1995 <br> * abstract * <br> --- | 1,10,12 | |

-/--

The present search report has been drawn up for all claims

| Place of search | Date of completion of the search | Examiner |
|---|---|---|
| THE HAGUE | 22 May 1997 | CALLEWAERT, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

| | European Patent Office | EUROPEAN SEARCH REPORT | Application Number EP 97 30 1199 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE 43 11 851 A (R. BOSCH) 13 October 1994 * abstract * ----- | 22,23 | |

TECHNICAL FIELDS SEARCHED (Int.Cl.6)

The present search report has been drawn up for all claims

| Place of search | Date of completion of the search | Examiner |
|---|---|---|
| THE HAGUE | 22 May 1997 | CALLEWAERT, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)